(19) Europäisches Patentamt
European Patent Office
Office européen des brevets

(11) **EP 2 523 368 A1**

(12) **EUROPEAN PATENT APPLICATION**
published in accordance with Art. 153(4) EPC

(43) Date of publication:
**14.11.2012 Bulletin 2012/46**

(51) Int Cl.:
*H04B 10/04* (2006.01)    *G02F 2/00* (2006.01)
*H04B 10/06* (2006.01)    *H04B 10/14* (2006.01)
*H04B 10/142* (2006.01)   *H04B 10/152* (2006.01)
*H04B 10/26* (2006.01)    *H04B 10/28* (2006.01)

(21) Application number: **10842259.3**

(22) Date of filing: **24.12.2010**

(86) International application number:
**PCT/JP2010/073866**

(87) International publication number:
**WO 2011/083748 (14.07.2011 Gazette 2011/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.01.2010 JP 2010002501**

(71) Applicant: **NEC Corporation Tokyo 108-8001 (JP)**

(72) Inventors:
• **YASUDA, Wakako**
  **Tokyo 108-8001 (JP)**
• **FUKUCHI, Kiyoshi**
  **Tokyo 108-8001 (JP)**
• **OGASAHARA, Daisaku**
  **Tokyo 108-8001 (JP)**

(74) Representative: **Vossius & Partner Siebertstrasse 4 81675 München (DE)**

(54) **COHERENT LIGHT RECEIVING APPARATUS, COHERENT LIGHT COMMUNICATIONS SYSTEM EMPLOYING SAME, AND COHERENT LIGHT COMMUNICATIONS METHOD**

(57)    With respect to a coherent optical receiving apparatus, a polarization multiplexing light signal, whereupon a first signal is placed upon a first polarized wave light and a second signal is placed upon a second polarized wave light, is polarization divided upon the transmitting side thereof, and the first signal and the second signal cannot be received in correspondence with the transmitting side. Accordingly, disclosed is a coherent optical receiving apparatus, comprising a coherent light receiving unit that detects coherent light, and a signal processing unit that carries out signal processing that is set with control coefficients. The coherent light receiving unit receives a first polarized light that is modulated with a first transmitted signal and outputs a first detected signal, and simultaneously receives the first polarized light with a second polarized light that is modulated with a second transmitted signal, and outputs a second detected signal. The signal processing unit establishes a first control coefficient on the basis of the first detected signal, and establishes a second control coefficient on the basis of the first control coefficient and the second detected signal, and employs the second control coefficient to output a first received signal corresponding to the first transmitted signal, and a second received signal corresponding to the second transmitted signal.

FIG. 2

**Description**

**TECHNICAL FIELD**

The present invention relates to coherent optical receivers, coherent optical communications systems provided therewith, and coherent optical communications methods and, in particular, to a coherent optical receiver which receives polarization multiplexing optical signals by means of coherent detection and digital signal processing, and to a coherent optical communications system employing same and a coherent optical communications method.

**BACKGROUND ART**

The data capacity in the network has been increasing year by year due to the wide spread of the Internet. In the trunk line connecting metropolitan areas, the optical transmission link whose transmission capacity per one channel is 10Gb/s or 40Gb/s has already been introduced. On-Off-Keying (OOK) is employed as a modulation scheme in 10Gb/s transmission. On the other hand, the OOK scheme is unsuitable for long-haul transmission because the transmission characteristics are greatly influenced by the chromatic dispersion due to the narrow optical pulse width of 25ps in 40Gb/s transmission systems. Therefore, the multilevel modulation scheme using phase modulation has been adopted, and Quadrature-Phase-Shift-Keying (QPSK) scheme is mainly employed for 40Gb/s transmission systems.

In the 100Gb/s class super high speed optical transmission, it is necessary to suppress the influence of chromatic dispersion by widening the optical pulse width, that is, by decreasing the baud rate by means of increasing the multiplicity. A polarization multiplexing scheme is a method for achieving the above. In the polarization multiplexing scheme, two systems of the optical signals are inputted into an optical fiber with the oscillation planes of electric field intensity Ex and $E_Y$ orthogonal to each other. A signal light with electric field intensity of Ex and a signal light with electric field intensity of $E_Y$ propagate with their oscillation planes rotating randomly keeping the orthogonal relation in an optical fiber. The orthogonal signal light $E_X+E_Y$ is obtained whose rotation angle $\theta$ is unknown at the output end of the optical fiber. In this specification, signal light Ex represents a signal light with electric field intensity of Ex, and signal light $E_X+E_Y$ represents a signal light in which the oscillation directions of electric field intensity Ex and $E_Y$ are orthogonal to each other.

It is known that a polarization demultiplexing scheme includes an optical scheme and a signal processing scheme. In the optical scheme, the polarization demultiplexing is performed by using a polarization control element and a polarization splitter. When the orthogonal signal light $E_X+E_Y$ is projected on the polarization planes of Ex' and $E_Y$' which the polarization control element defines and is separated, the signal lights of Ex' = aEx + b$E_Y$ and $E_Y$'= cEx + d$E_Y$ are obtained. While monitoring the output signal after the separation, the rotation angle $\theta$ is estimated by providing feedback to the polarization control element so that the output signal will become maximum, that is, Ex' = aEx (b=0) and $E_Y$' = d$E_Y$ (c=0). However, the polarization control element is not able to follow fast polarization fluctuations because its control cycle is about 100MHz.

On the other hand, in the signal processing scheme, the polarization demultiplexing is performed after coherent detection of the orthogonal signal light and conversion into electric signal. When the orthogonal signal light $E_X+E_Y$ is projected on the polarization planes of X' and Y' which the local light defines and is detected, the electric field information of the signal light is obtained as electric signals.

An example of the coherent optical receiver using such signal processing scheme is described in the patent literature 1. According to the coherent optical receiver in the patent literature 1, local oscillator light has orthogonal polarization components in which the optical frequencies are different to each other. The local oscillator light and the received signal light are combined by a 2 x 4 optical hybrid circuit. After that two differential optical detectors perform differential photoelectric conversion, and then analog-to-digital (AD) conversion circuits convert the analog received signals output from the differential optical detectors into digital signals. A digital processing circuit estimates received data by executing signal processing for the obtained digital signal.

Patent Literature 1: Japanese Patent Application Laid-Open No. 2008-153863 (paragraph "0012" and FIG. 1)
Non Patent Literature 1: D. N. Godard, "Self-Recovering Equalization and Carrier Tracking in Two-Dimensional Data Communication Systems", IEEE Transactions on Communications, The Institute of Electrical and Electronics Engineers, November, 1980, Vol. COM-28, No. 11, pp. 1867-1875.

**DISCLOSURE OF INVENTION**

**PROBLEM TO BE SOLVED BY THE INVENTION**

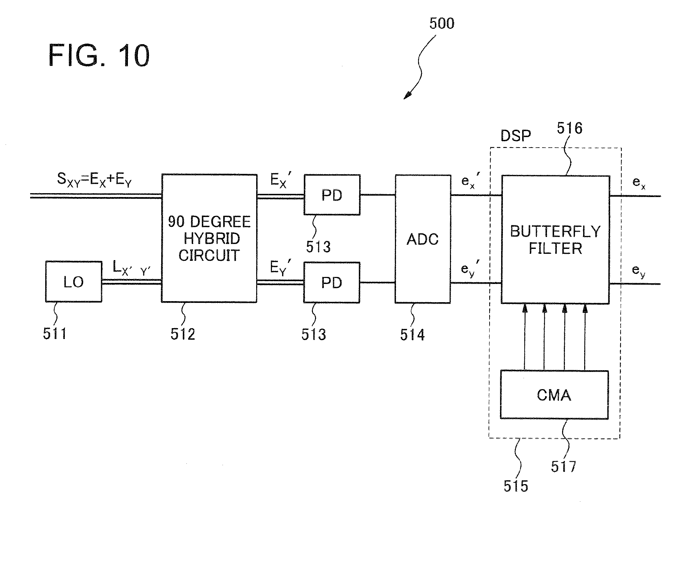

First, the method for polarization demultiplexing by signal processing using a related coherent optical receiver will be described. FIG. 10 is a block diagram showing the configuration of the related coherent optical receiver 500. The polarization multiplexed signal light $S_{XY}(t) = Ex + E_Y$ interferes with local light $L_{X'Y'}(t)$ from a local oscillator (LO) light source 511 in a 90 degree hybrid circuit 512, to be signal light Ex' and $E_Y$', which are detected by photo detectors (PD) 513. The detection signal detected by the photo detector includes electric field information of the signal light. An analog-to-digital converter (ADC) 514 quantizes the detection signal and outputs quantized signals of $e_x$' and $e_y$' to a digital signal processor (DSP) 515. In the digital signal processor 515, the polarization rotation angle $\theta$ of $e_x$' and $e_y$' is canceled by means of a butterfly filter 516 to obtain polarization demultiplexed demodulation signals of $e_x$ and $e_y$. At that time, a CMA processing unit 517 determines the filter parameters by using the Constant Modulus Algorithm (CMA), for example (refer to non patent literature 1).

In the related coherent optical receiver 500, quantized demodulation signals of $e_x$ and $e_y$, which are obtained by the process in the digital signal processor (DSP) 515, include electric field information of Ex and $E_Y$ in the polarization multiplexed signal light $S_{XY}$. However, it is not always true that the demodulated signal $e_x$ corresponds to the electric field information $E_X$ and the demodulated signal $e_y$ corresponds to the electric field information $E_Y$. There are cases where the demodulated signal ex corresponds to the electric field information $E_Y$ and the demodulated signal $e_y$ corresponds to the electric field information Ex. The reason is as follows. Since the CMA algorithm merely performs the control for keeping constant the electric field intensity of quantized signals $e_x$' and $e_y$', it is not able to control which of the electric field information Ex and $E_Y$ the converged demodulated signal $e_x$ or $e_y$ corresponds to. That is to say, it is possible to separate the signals put on two multiplexed polarization lights into two signals by signal processing which just controls the amplitude including the electric field information. However, it is not always possible to receive the transmitted signals put on the X polarization light (or Y polarization light) recognizing on the receiving side that the signals have been put on the X polarization light (or Y polarization light).

As mentioned above, the related coherent optical receiver has the problem that it is not able to receive the first signal and the second signal included in the polarization multiplexed light signals by performing the polarization demultiplexing corresponding to the transmitter side on which the first signal has been put on the first polarization light, the second signal has been put on the second polarization light, and then these signals have been combined by the polarization multiplexing.

The object of the present invention is to provide a coherent optical receiver, a coherent optical communications system employing same and a coherent optical communications method which solve the problem mentioned above that it is not able to receive the first signal and the second signal included in the polarization multiplexed light signals by performing the polarization demultiplexing corresponding to the transmitter side on which the first signal has been put on the first polarization light, the second signal has been put on the second polarization light, and then these signals have been combined by the polarization multiplexing.

**MEANS FOR SOLVING A PROBLEM**

A coherent optical receiving apparatus according to an exemplary aspect of the invention includes a coherent optical receiving unit performing coherent optical detection; and a signal processing unit performing signal processing defined by control parameters; wherein the coherent optical receiving unit outputs a first detection signal receiving a first polarization light modulated by a first transmission signal, and outputs a second detection signal receiving simultaneously the first polarization light and a second polarization light modulated by a second transmission signal; and the signal processing unit determines a first control parameter on the basis of the first detection signal, determines a second control parameter on the basis of the first control parameter and the second detection signal, and outputs a first received signal corresponding to the first transmission signal and a second received signal corresponding to the second transmission signal by using the second control parameter.

A coherent optical communications system according to an exemplary aspect of the invention includes a transmitter; and a coherent optical receiving apparatus connected to the transmitter through an optical fiber; wherein the transmitter includes a light source; a first modulator modulating output light having first polarization from the light source with a first transmission signal and outputting first polarization light; a second modulator modulating output light having second polarization from the light source with a second transmission signal and outputting second polarization light; an orthogonal multiplexing unit orthogonally multiplexing the first polarization light and the second polarization light and transmitting to the optical fiber; and a transmission control unit controlling intensity of the second polarization light; wherein the coherent optical receiving apparatus includes a coherent optical receiving unit performing coherent optical detection; a signal processing unit performing signal processing defined by control parameters; and a receiving controller unit controlling an operation of the signal processing unit; wherein the coherent optical receiving unit receives the first polarization light and outputs a first detection signal, and receives simultaneously the first polarization light and the second polarization light and outputs a second detection signal; the receiving controller unit instructs the signal processing unit to start a processing to determine a first control parameter when confirming that the coherent optical receiving unit has received the first polarization light, and instructs the signal processing unit to start a processing to determine a second control parameter when confirming that the coherent optical receiving unit has received simultaneously the first polarization light and the second polarization light; and the signal processing unit determines the first control parameter on the basis of the first detection signal, determines the second control parameter on the basis of the first control parameter and the second detection signal, and outputs a first received signal corresponding to the first transmission signal and a second received signal corresponding to the second transmission signal by using the second control parameter.

A coherent optical communications method according to an exemplary aspect of the invention includes the steps of: transmitting first polarization light obtained by modulating output light having first polarization with a first transmission signal; receiving the first polarization light and obtaining a first detection signal by performing coherent optical detection; transmitting second polarization light obtained by modulating output light having second polarization with a second transmission signal; receiving simultaneously the first polarization light and the second polarization light and obtaining a second detection signal by performing coherent optical detection; determining a first control parameter on the basis of the first detection signal; determining a second control parameter on the basis of the first control parameter and the second detection signal; and obtaining a first received signal corresponding to the first transmission signal and a second received signal corresponding to the second transmission signal by using the second control parameter.

**EFFECT OF THE INVENTION**

According to the coherent optical receiving apparatus, the coherent optical communications system employing same and the coherent optical communications method by the present invention, it becomes possible to receive the first signal and the second signal included in the polarization multiplexed light signals by performing the polarization demultiplexing corresponding to the transmitter side on which the first signal has been put on the first polarization light, the second signal has been put on the second polarization light, and then these signals have been combined by the polarization multiplexing.

**BRIEF DESCRIPTION OF THE DRAWINGS**

FIG. 1 is a block diagram showing the configuration of a coherent optical receiving apparatus in accordance with the first exemplary embodiment of the present invention.
FIG. 2 is a block diagram showing the configuration of a digital coherent optical communications system in accordance with the second exemplary embodiment of the present invention.
FIG. 3 is a block diagram showing the configuration of a digital signal processor (DSP) in accordance with the second exemplary embodiment of the present invention.
FIG. 4 is a sequence diagram illustrating the initial setting of filter coefficients in a digital signal processor (DSP) in accordance with the second exemplary embodiment of the present invention.
FIG. 5 is a block diagram showing the configuration of a digital coherent optical communications system in accordance with the third exemplary embodiment of the present invention.
FIG. 6 is a block diagram showing the configuration of a transmitter and a receiver in accordance with the third exemplary embodiment of the present invention.
FIG. 7 is a sequence diagram illustrating the initial setting of filter parameters in a digital signal processor (DSP) in accordance with the third exemplary embodiment of the present invention.
FIG. 8 is a block diagram showing the configuration of a digital coherent optical communications system in accordance with the fourth exemplary embodiment of the present invention.
FIG. 9 is a block diagram showing the configuration of a digital signal processor (DSP) in accordance with to the fourth exemplary embodiment of the present invention.
FIG. 10 is a block diagram showing the configuration of the related digital coherent receiver.

**DESCRIPTION OF EMBODIMENTS**

The exemplary embodiments of the present invention will be described with reference to drawings below.

[The first exemplary embodiment]

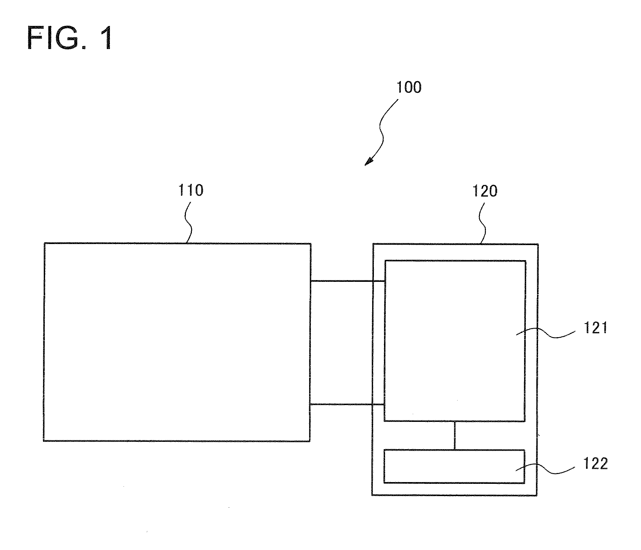

FIG. 1 is a block diagram showing the configuration of a coherent optical receiving apparatus 100 in accordance with the first exemplary embodiment of the present invention. The coherent optical receiving apparatus 100 has a coherent optical receiving unit 110 performing coherent optical detection and a signal processing unit 120 performing signal processing defined by control parameters.

The coherent optical receiving unit 110 outputs the first detection signal to the signal processing unit 120 receiving the first polarization light modulated by the first transmission signal, and outputs the second detection signal to the signal processing unit 120 receiving simultaneously the first polarization light and the second polarization light modulated by the second transmission signal. The signal processing unit 120 determines the first control parameters on the basis of the first detection signal and determines the second control parameters on the basis of the first control parameters and the second detection signal. And then the signal processing unit 120 outputs the first received signal corresponding to the first transmission signal and the second received signal corresponding to the second transmission signal by using the second control parameters.

Here, the signal processing unit 120 can include a filter unit 121 performing signal processing on the basis of control parameters and a control parameter processing unit 122 calculating the control parameters by a control parameter determination algorithm. At that time, the control parameter processing unit 122 determines the first control parameters so that the output signal of the filter unit 121 may converge at the first received signal for the input of the first detection signal. The first control parameter is changed so that the output signal of the filter unit 121 may converge at the second received signal for the input of the second detection signal, and the control parameters by which the output signal of the filter unit 121 converges at the second received signal are fixed as the second control parameters. The filter unit 121 outputs the first received signal and the second received signal on the basis of those second control parameters.

Thus, according to the coherent optical receiving apparatus 100 of this exemplary embodiment, it becomes possible to receive the first transmission signal and the second transmission signal corresponding to the transmitter side by means of receiving the first polarization light modulated by the first transmission signal and the second polarization light modulated by the second transmission signal and performing the polarization demultiplexing.

[The second exemplary embodiment]

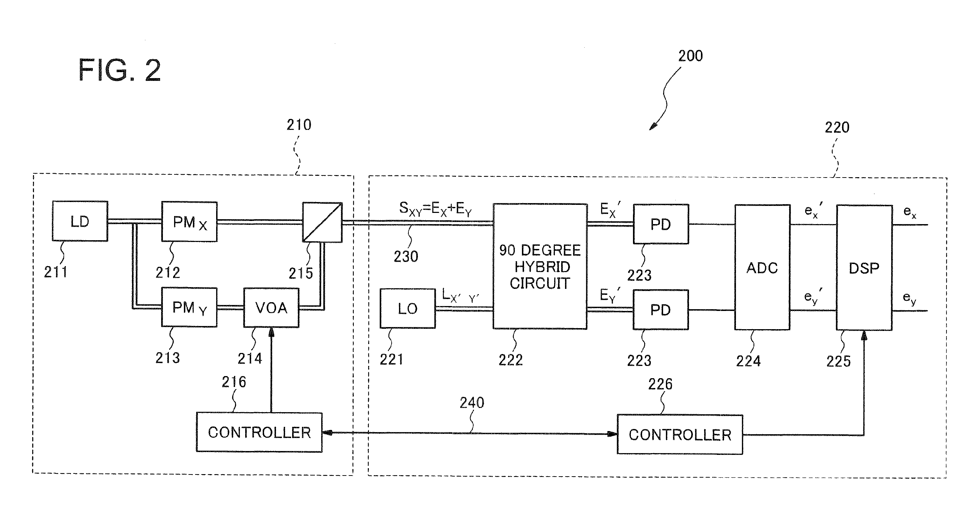

Next, the second exemplary embodiment of the present invention will be described. FIG. 2 is a block diagram showing the configuration of a coherent optical communications system 200 in accordance with the second exemplary embodiment of the present invention. The coherent optical communications system 200 has a transmitter 210 and a receiver 220.

The transmitter 210 includes a signal light source (LD) 211, a first phase modulator ($PM_X$) 212 as a first modulator and a second phase modulator ($PM_Y$) 213 as a second modulator. In addition, it has a polarization beam splitter (PBS) 215 as an orthogonal multiplexing unit, and has a variable optical attenuator (VOA) 214 and a controller 216, which compose a transmission control unit.

The receiver 220 includes a local light source (LO) 221, a 90 degree hybrid circuit 222, and a photo detector (PD) 223, which compose a coherent optical receiving unit. In addition, it has an analog-to-digital converter (ADC) 224 and a digital signal processor (DSP) 225, which compose a signal processing unit, and has a receiving controller unit 226.

Here, the controller 216 controls the variable optical attenuator (VOA) 214 and the receiving controller unit 226 controls the digital signal processor (DSP) 225, respectively. The transmitter 210 and the receiver 220 are connected through an optical fiber 230 and communication is performed thereby. Further, the coherent optical communications system 200 in accordance with this exemplary embodiment is provided with a line 240 which enables communication between the controller 216 and the receiving controller unit 226.

In the transmitter 210, the output light from the signal light source (LD) 211 is separated into X polarization light composed of the first polarization light component X and Y polarization light composed of the second polarization light component Y, which are orthogonal to each other, and then they are input into the first phase modulator ($PM_X$) 212 and the second phase modulator ($PM_Y$) 213 respectively. The first phase modulator ($PM_X$) 212 modulates the X polarization light with the first transmission signal and outputs the first signal light $E_X$ with the electric field intensity $E_X$. The second phase modulator ($PM_Y$) 213 modulates the Y polarization light with the second transmission signal and outputs the second signal light $E_Y$ with the electric field intensity $E_Y$. The first signal light Ex and the second signal light $E_Y$ are orthogonally multiplexed in the polarization beam splitter (PBS) 215, and the orthogonal signal light $S_{XY}$ (= $E_X$ + $E_Y$) is output. Here, the variable optical attenuator (VOA) 214 performs on/off control of the output of the second signal light with its polarization in the Y direction, according to the instructions from the controller 216.

The orthogonal signal light $S_{XY}$ (= Ex + $E_Y$) input into the receiver 220 interferes with the local light $L_{X'Y'}$ from the local light source (LO) 221 in the 90 degree hybrid circuit 222 to be the signal light Ex', $E_Y'$ which is projected on arbitrary polarization plane X', Y' of the local light $L_{X'Y'}$. The signal light Ex', $E_Y'$ is detected in the photo detector (PD) 223, and the electric field information on the signal light Ex', $E_Y'$ is input into the analog-to-digital converter (ADC) 224 as a detection signal. The analog-to-digital converter (ADC) 224 quantizes the detection signals, and then outputs quantized signals of $e_x'$ and $e_y'$. The quantized signals of $e_x'$ and $e_y'$ are processed for polarization demultiplexing in the digital signal processor (DSP) 225, and demodulated signals of $e_x$ and $e_y$ are obtained.

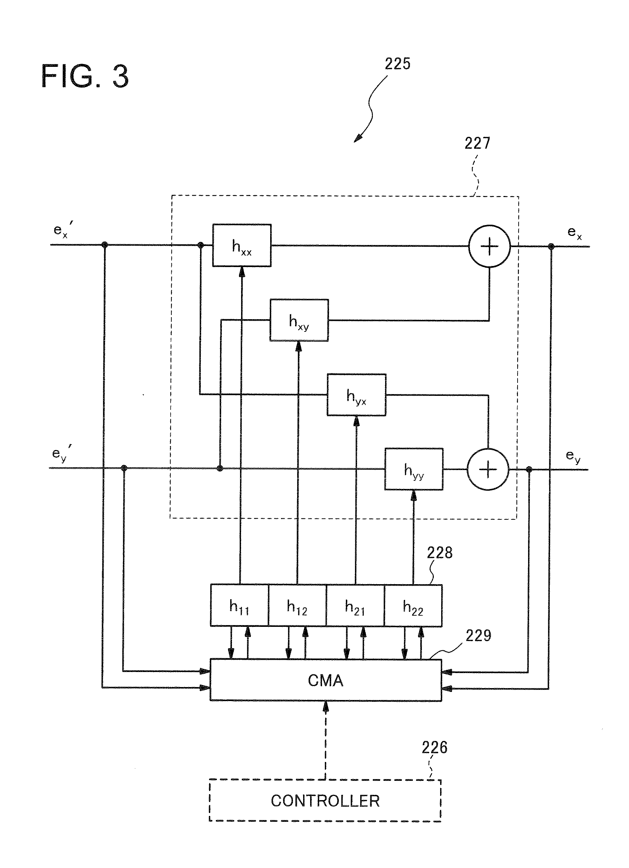

The configuration of the digital signal processor (DSP) 225 is shown in FIG. 3. The digital signal processor (DSP) 225 is provided with a butterfly filter 227, a memory unit 228, and a CMA processing unit (CMA) 229. The butterfly filter 227 performs the matrix operation on the input quantized signals of $e_x'$ and $e_y'$ according to the following formula (1), and outputs demodulated signals of $e_x$ and $e_y$.

$$\begin{pmatrix} e_x \\ e_y \end{pmatrix} = H \begin{pmatrix} e_x' \\ e_y' \end{pmatrix} = \begin{pmatrix} h_{xx} & h_{xy} \\ h_{yx} & h_{yy} \end{pmatrix} \begin{pmatrix} e_x' \\ e_y' \end{pmatrix} \qquad (1)$$

The matrix H is a rotation matrix for canceling the rotation angle of the polarization axis between the polarization plane XY of the transmission side signal light and the polarization plane X'Y' of the receiver side signal light. Here, since the relation between the polarization axis on the polarization plane XY of the transmission side and that on the polarization plane X'Y' of the receiver side is not determined uniquely, it is difficult to calculate the matrix presuming the rotation angle. One of the methods to calculate each element of this matrix H is a CMA algorithm (refer to a non patent literature 1, for example). As mentioned below, in this exemplary embodiment, the configuration is employed in which the CMA processing unit (CMA) 229 calculates each element of the matrix H (filter coefficients) by means of the CMA algorithm. The CMA processing unit (CMA) 229 outputs to the butterfly filter 227 the filter coefficients of $h_{11}$, $h_{12}$, $h_{21}$, and $h_{22}$ calculated by using the CMA algorithm, when each element of the matrix H is obtained as $h_{xx}=h_{11}$, $h_{xy}=h_{12}$, $h_{yx}=h_{21}$, and $h_{yy}=h_{22}$.

Next, the behavior of the CMA processing unit (CMA) 229 will be described in detail. The CMA processing unit (CMA) 229 calculates filter coefficients in the subsequent time period using the filter coefficients of $h_{11}$, $h_{12}$, $h_{21}$, and $h_{22}$ stored in the memory unit 228. That is to say, when the filter coefficients in the time period of k are set for $h_{11}(k)$, $h_{12}(k)$, $h_{21}(k)$, and $h_{22}(k)$, the CMA processing unit (CMA) 229 calculates the filter coefficients in the time period of k+1, that is, $h_{11}(k+1)$, $h_{12}(k+1)$, $h_{21}(k+1)$, and $h_{22}(k+1)$, according to the following formula (2). The CMA processing unit (CMA) 229 overwrites in the memory unit 228 with the calculation results of the filter coefficients in the time period of k+1. If an FIR filter is used for the calculation of the formula (2), the vector h in the formula (2) represents tap coefficients of the FIR filter.

$$h_{11}(k+1) = h_{11}(k) + \mu\, \varepsilon_x e_x(k)\, \overline{e_x'}(k)$$
$$h_{12}(k+1) = h_{12}(k) + \mu\, \varepsilon_x e_x(k)\, \overline{e_y'}(k)$$
$$h_{21}(k+1) = h_{21}(k) + \mu\, \varepsilon_y e_y(k)\, \overline{e_x'}(k) \qquad (2)$$
$$h_{22}(k+1) = h_{22}(k) + \mu\, \varepsilon_y e_y(k)\, \overline{e_y'}(k)$$

Here, $\varepsilon_x$ and $\varepsilon_y$ represent error functions, which are expressed by the following formula.

$$\varepsilon_x = 1 - |e_x(k)|^2, \quad \varepsilon_y = 1 - |e_y(k)|^2 \qquad (3)$$

Here, $\mu$ is a constant and a bar represents conjugate complex number.

The CMA algorithm performs control of keeping the intensity of the quantized signals of $e_x'$ and $e_y'$ constant using the error functions of $\varepsilon_x$ and $\varepsilon_y$. However, based solely on the information on the electric field intensity, it is indistinguishable whether the data in the quantized signals correspond to the information put on the X polarization light or the information put on the Y polarization light. Therefore, as mentioned above, when using the filter coefficients of $h_{11}$, $h_{12}$, $h_{21}$, and $h_{22}$ calculated by using the CMA algorithm, there can be cases where the signal component Ex of the first signal light with X polarization is converged on the demodulated signal $e_y$, and the signal component $E_Y$ of the second signal light with Y polarization is converged on the demodulated signal $e_x$.

Therefore, in this exemplary embodiment, by setting up an order for calculation of the filter coefficients, the signal components which converge on the demodulated signals of $e_x$ and $e_y$ are controlled. Here, the phenomenon that the demodulated signals are switched with the transmission side does not occur at every updating of the filter coefficients. Therefore, by inputting the correct filter coefficients into the butterfly filter 227 at first and then updating them according to the formula (2) successively, it is possible to determine the filter coefficients with which to enable input signals to converge on the demodulated signals corresponding to the transmission side. A training method will be described below, which is the method for determining the filter coefficients of $h_{11}$, $h_{12}$, $h_{21}$, and $h_{22}$ of the butterfly filter 227 with which the signal component Ex with X polarization is converged on the demodulated signal $e_x$ and the signal component $E_Y$ with Y polarization is converged on the demodulated signal $e_y$.

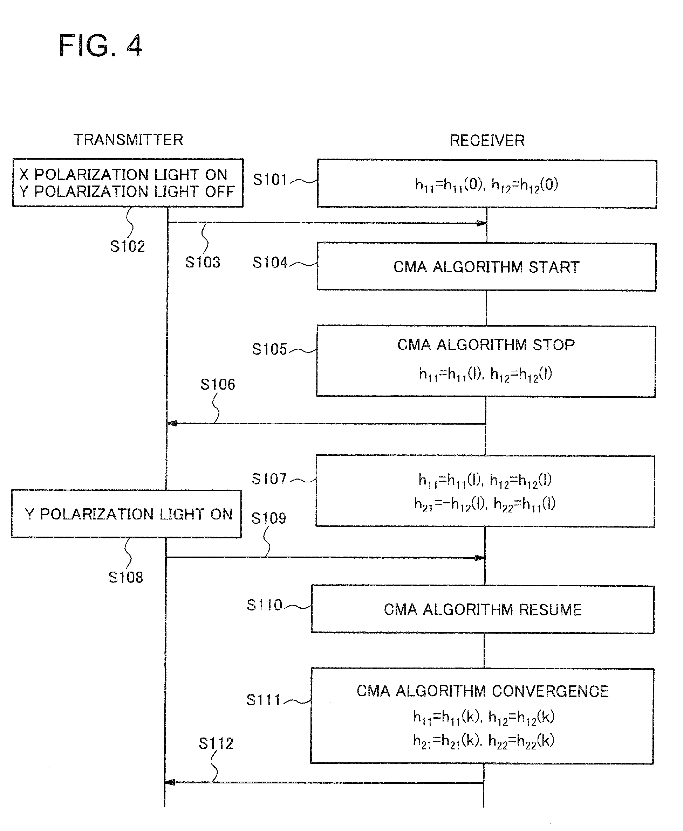

FIG. 4 is a sequence diagram illustrating the initial setting of the filter coefficients. First, the receiving controller unit 226 in the receiver 220 sets arbitrary filter coefficients, that is $h_{11}=h_{11}(0)$ and $h_{12}=h_{12}(0)$, for the memory unit 228 (step S101). In this exemplary embodiment, those are set as $h_{11}(0) = 1$ and $h_{12}(0) = 0$. On the other hand, the controller 216 in the transmitter 210 puts the output signal light with Y polarization into a non-output (OFF) state and puts only output signal light with X polarization into an output (ON) state by controlling the variable optical attenuator (VOA) 214 (step S102). At that time, the only X polarization light is transmitted to the receiver 220 through the optical fiber 230 (step S103).

The CMA processing unit (CMA) 229 starts calculating CMA algorithm using the initial setting values $h_{11}(0)$, $h_{12}(0)$ of the filter coefficients (step S104). The CMA processing unit (CMA) 229 sequentially updates the filter coefficients by using the first and second formulas of the formula (2). At that time, the signal light $S_{XY}$ (=Ex) input into the receiver 120 is separated into the signal lights of Ex' and $E_Y$' which are projected on the polarization planes of X' and Y' of the local light $L_{X'Y'}$. Here, if $E_X' > E_Y'$, the relation between the filter coefficients becomes $h_{11} > h_{12}$ and they are converged because the output $e_x$ is mainly composed of the quantized signal $e_x'$. On the other hand, if $E_X' < E_Y'$, the relation between the filter coefficients becomes $h_{11} < h_{12}$ and they are converged because the output $e_x$ is mainly composed of the quantized signal $e_y'$. Here, $h_{11}(1)$ and $h_{12}(1)$ are obtained as the converged values of the filter coefficients. At this time, the receiving controller unit 226 stops the calculation once (step S105) and notifies the controller 216 of that effect through the line 240 (step S106). The output $e_x$ of the butterfly filter 227 at this time is expressed in the following formula using the converged values of the filter coefficients of $h_{11}(1)$ and $h_{12}(1)$.

$$e_x = h_{11}(1) \cdot e_x' + h_{12}(1) \cdot e_y' \qquad (4)$$

The receiving controller unit 226 sets filter coefficients as $h_{11} = h_{11}(1)$, $h_{12} = h_{12}(1)$, $h_{21} = -h_{12}(1)$, and $h_{22} = h_{11}(1)$ for the memory unit 228 (step S107).

Next, the controller 216 in the transmitter 210 gets the transmitter 210 outputting the light signal with Y polarization along with the light signal with X polarization by controlling the variable optical attenuator (VOA) 214 (step S108), and notifies the receiving controller unit 226 of that effect through the line 240 (step S109).

After the receiving controller unit 226 has received this notification (step S109), the CMA processing unit (CMA) 229 resumes calculating CMA algorithm and then updates the filter coefficients according to the formula (4) (step S110). Here, the quantized signal $e_x'$ includes the components of both the signal light Ex and $E_Y$. For example, if the quantized signal $e_x'$ includes more components of the signal light Ex, the quantized signal $e_y'$ will include more components of the signal light $E_Y$. When the calculations according to the formula (4) is performed in this condition, since the relation between the filter coefficients set in step 107 is $h_{11} > h_{12}$, the quantized signal $e_x'$ becomes dominant in the output ex. As a result, more components of the signal light Ex will be included in the output ex. This tendency gets stronger by updating the filter coefficients repeatedly, and finally the output ex converges on the signal corresponding to the signal light Ex, then $h_{11}(k)$ and $h_{12}(k)$ are obtained as the filter coefficients. With regard to the output $e_y$, similarly, since the relation between the filter coefficients is $h_{21} < h_{22}$, the quantized signal $e_y'$ becomes dominant in the output $e_y$. As a result, the output $e_y$ converges on the signal corresponding to the signal light $E_Y$, then $h_{21}(k)$ and $h_{22}(k)$ are obtained as the filter coefficients.

If the quantized signal $e_x'$ includes more components of the signal light $E_Y$ and the quantized signal $e_y'$ includes more components of the signal light Ex, since the relation between the filter coefficients set in step 107 is $h_{11} < h_{12}$, the quantized signal $e_y'$, which includes more components of the signal light Ex, becomes dominant in the output $e_x$. As a result, the output $e_x$ converges on the signal corresponding to the signal light Ex. With regard to the output $e_y$, similarly, since the relation between the filter coefficients is $h_{21} < h_{22}$, the quantized signal $e_x'$, which includes more components of the signal light $E_Y$, becomes dominant in the output $e_y$. As a result, the output $e_y$ converges on the signal corresponding to the signal light $E_Y$, then $h_{21}(k)$ and $h_{22}(k)$ are obtained as the filter coefficients (step S111).

After the above steps have ended, the receiving controller unit 226 notifies through the line 240 the controller 216 in the transmitter 210 of the effect that CMA processing has finished (step S 112).

As mentioned above, first of all, the only signal light with X polarization is transmitted, and then the coefficients of the butterfly filter 227 are temporarily determined. Next, the signal light with Y polarization is transmitted multiplexed with the signal light with X polarization, then the coefficients of the butterfly filter 227 are determined. As a result, the polarization demultiplexing becomes possible where the output $e_x$, which is obtained by signal processing in the digital signal processor (DSP) 225, surely corresponds to the signal light Ex with X polarization and the output $e_y$ surely corresponds to the signal light $E_Y$. That is to say, according to the coherent optical communications system 200 in this exemplary embodiment, it becomes possible to perform the polarization demultiplexing for the polarization multiplexed optical signals in which the first signal has been put on the first polarization light and the second signal has been put on the second polarization light on the transmitter side, and to receive the first signal and the second signal corresponding to the transmitter side.

[The third exemplary embodiment]

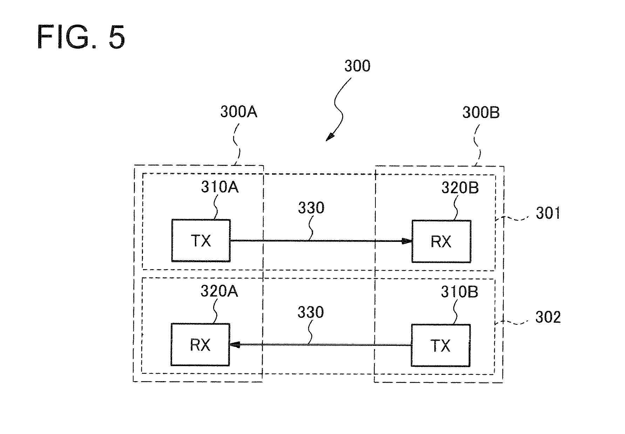

Next, the third exemplary embodiment of the present invention will be described. FIG. 5 is a block diagram showing the configuration of a coherent optical communications system 300 according to the third exemplary embodiment of the present invention. As shown in FIG. 5, the coherent optical communications system 300 includes a terminal station 300A and a terminal station 300B. The terminal station 300A is provided with a transmitter 310A and a receiver 320A, and the terminal station 300B is provided with a receiver 320B and a transmitter 310B. The transmitter 310A and the receiver 320B, the transmitter 310B and the receiver 320A are connected through an optical fiber 330 respectively, and mutually communicate. The coherent optical communications system 300 according to this exemplary embodiment is composed of a first coherent optical communications system 301 including the transmitter 310A, the receiver 320B and the optical fiber 330, and a second coherent optical communications system 302 including the transmitter 310B, the receiver 320A and the optical fiber 330.

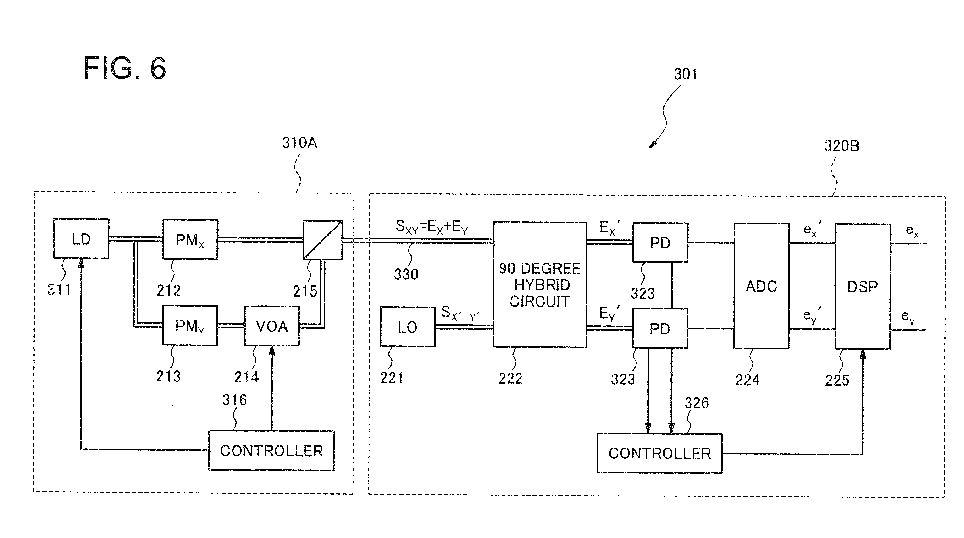

The configuration of the first coherent optical communications system 301 according to this exemplary embodiment is shown in FIG. 6. The configuration of the transmitter 310A is the same as that of the transmitter 210 in the second exemplary embodiment with the exception that a controller 316 also controls a signal light source (LD) 311. The configuration of the receiver 320B is the same as that of the receiver 220 of the second exemplary embodiment with the exception that a photo detector (PD) 323 has a power monitoring function and notifies a receiving controller unit 326 of the monitoring results. The transmitter 310B and the receiver 320A, which compose the second coherent optical communications system 302, are similarly configured. In this exemplary embodiment, the line 240 in the coherent optical communications system 200 according to the second exemplary embodiment is unnecessary.

The configuration of the digital signal processor (DSP) provided for the receiver 320B is the same as that of the digital signal processor (DSP) 225 in the second exemplary embodiment shown in FIG. 3. Here, the coefficients of the butterfly filter in the digital signal processor (DSP) 225 are set at $bh_{11}$ (k), $bh_{12}$ (k), $bh_{21}$ (k), and $bh_{22}$ (k). As mentioned above, when using these filter coefficients, there can be cases where the signal component Ex of the first signal light with X polarization transmitted from the transmitter 310A is converged on the demodulated signal $e_y$, and the signal component $E_Y$ of the second signal light with Y polarization is converged on the demodulated signal $e_x$.

Therefore, in this exemplary embodiment, by setting up an order for calculation of the filter coefficients, the signal components which converge on the demodulated signals of ex and $e_y$ are controlled. Here, the phenomenon that the demodulated signals are switched with the transmission side does not occur at every updating of the filter coefficients. Therefore, by inputting the correct filter coefficients into the butterfly filter at first and then updating them according to the formula (2) successively, it is possible to determine the filter coefficients with which to enable input signals to converge on the demodulated signals corresponding to the transmission side. A training method will be described below, which is the method for determining the filter coefficients of $h_{11}$, $h_{12}$, $h_{21}$, and $h_{22}$ of the butterfly filter with which the signal component Ex with X polarization is converged on the demodulated signal $e_x$ and the signal component $E_Y$ with Y polarization is converged on the demodulated signal $e_y$.

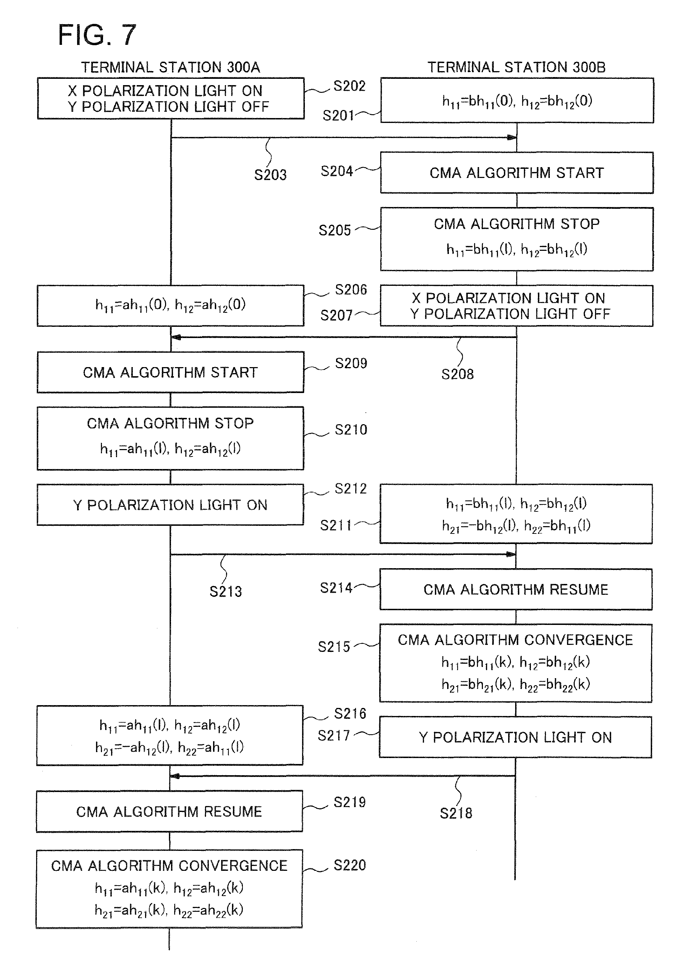

FIG. 7 is a sequence diagram illustrating the initial setting of the filter coefficients. First, the receiving controller unit 326B provided for the receiver 320B in the terminal station 300B sets arbitrary filter coefficients, that is $h_{11}=bh_{11}$ (0) and $h_{12}=bh_{12}$ (0), for the memory unit 228B (step S201). In this exemplary embodiment, those are set as $bh_{11}$. (0) = 1 and $bh_{12}$ (0) = 0.

On the other hand, the controller 316A provided for the transmitter 310A in the terminal station 300A puts the signal light source (LD) 311A into an OFF state. After controlling the variable optical attenuator (VOA) 214A and setting the signal light with Y polarization not outputting, the controller 316A puts the signal light source (LD) 311A into an ON state to put the X polarization light into an output (ON) state and put the Y polarization light into a non-output (OFF) state (step S202). At this time, the only X polarization light is transmitted to the receiver 320B through the optical fiber 330 (step S203).

When the receiving controller unit 326B provided for the receiver 320B in the terminal station 300B confirms that the photo detector (PD) 323B has received the light signal and outputs the receiving light signal, it instructs the CMA processing unit 229B to start calculating CMA algorithm (step S204). The CMA processing unit (CMA) 229B sequentially updates the filter coefficients by using the first and second formulas of the formula (2). At this time, the converged values of the filter coefficients are set as $bh_{11}$ (1) and $bh_{12}$ (1), and the CMA processing unit (CMA) 229B stops the calculation (step S205).

On the other hand, the receiving controller unit 326A provided for the receiver 320A in the terminal station 300A sets arbitrary filter coefficients, that is $h_{11}=ah_{11}$ (0) and $h_{12}=ah_{12}$ (0), for the memory unit 228A (step S206). In this exemplary embodiment, those are set as $ah_{11}$ (0) = 1 and $ah_{12}$ (0) = 0.

Next, the controller 316B provided for the transmitter 310B in the terminal station 300B sets the signal light with Y polarization not outputting by controlling the variable optical attenuator (VOA) 214B. After that, the controller 316B puts the signal light source (LD) 311B into an ON state to put the X polarization light into an output (ON) state and put the Y polarization light into a non-output (OFF) state (step S207). At this time, the only X polarization light is transmitted to the receiver 320A through the optical fiber 330 (step S208).

When the receiving controller unit 326A provided for the receiver 320A in the terminal station 300A confirms that the photo detector (PD) 323A has received the light signal and outputs the receiving light signal, it instructs the CMA processing unit 229A to start calculating CMA algorithm (step S209). The CMA processing unit (CMA) 229A sequentially updates the filter coefficients by using the first and second formulas of the formula (2). At this time, the converged values of the filter coefficients are set as $ah_{11}$ (1) and $ah_{12}$ (1), and the CMA processing unit (CMA) 229A stops the calculation (step S210).

On the other hand, the receiving controller unit 326B provided for the receiver 320B in the terminal station 300B sets filter coefficients as $h_{11} = bh_{11}$ (1), $h_{12} = bh_{12}$ (1), $h_{21} = -bh_{12}$ (1), and $h_{22} = bh_{11}$ (1) for the memory unit 228B (step S211).

Next, the controller 316A provided for the transmitter 310A in the terminal station 300A puts the light signal with Y polarization along with the light signal with X polarization into an output (ON) state by controlling the variable optical attenuator (VOA) 214A (step S212). At this time, both the X polarization light and the Y polarization light are transmitted to the receiver 320B through the optical fiber 330 (step S213).

When the photo detector (PD) 323B outputs the receiving light signal about twice as large as that in the step 204, the receiving controller unit 326B provided for the receiver 320B in the terminal station 300B instructs the CMA processing unit 229B to resume calculating CMA algorithm (step S214). The CMA processing unit 229B updates the filter coefficients according to the formula (4). As a result, the filter coefficients converge, and $bh_{11}$ (k), $bh_{12}$ (k), $bh_{21}$ (k) and $bh_{22}$ (k) are obtained as the filter coefficients at that time (step S215).

In the same way, the receiving controller unit 326A provided for the receiver 320A in the terminal station 300A sets filter coefficients as $h_{11} = ah_{11}$ (1), $h_{12} = ah_{12}$ (1), $h_{21} = -ah_{12}$ (1), and $h_{22} = ah_{11}$ (1) for the memory unit 228A (step S216).

Next, the controller 316B provided for the transmitter 310B in the terminal station 300B puts the light signal with Y polarization along with the light signal with X polarization into an output (ON) state by controlling the variable optical attenuator (VOA) 214B (step S217). At this time, both the X polarization light and the Y polarization light are transmitted to the receiver 320A through the optical fiber 330 (step S218).

When the photo detector (PD) 323A outputs the receiving light signal about twice as large as that in the step 209, the receiving controller unit 326A provided for the receiver 320A in the terminal station 300A instructs the CMA processing unit 229A to resume calculating CMA algorithm (step S219). The CMA processing unit 229A updates the filter coefficients according to the formula (4). As a result, the filter coefficients converge, and $ah_{11}$ (k), $ah_{12}$ (k), $ah_{21}$ (k) and $ah_{22}$ (k) are obtained as the filter coefficients at that time (step S220).

As mentioned above, first of all, the only light signal with X polarization is transmitted from the transmitter 310A, and then the coefficients of the butterfly filter, which is provided for the digital signal processor (DSP) 225B in the receiver 320B, are temporarily determined. Next, the light signal with Y polarization is transmitted from the transmitter 310A multiplexed with the light signal with X polarization, then the coefficients of the butterfly filter of the digital signal processor (DSP) 225B are determined. As a result, the polarization demultiplexing becomes possible where the output signal ex, which is obtained by signal processing in the digital signal processor (DSP) 225B, surely corresponds to the signal component Ex with X polarization and the output signal $e_y$ surely corresponds to the signal component $E_Y$ with Y polarization. Similarly, in the receiver 320A, it is possible to perform the polarization demultiplexing for the polarization multiplexed signal light transmitted from the transmitter 310B and to receive them.

According to this exemplary embodiment, since the line 140 in the digital coherent optical communications system 100 of the first exemplary embodiment is unnecessary, it is possible to simplify the configuration of the coherent optical communications system which is able to perform the polarization demultiplexing corresponding to the transmitter side.

[The fourth exemplary embodiment]

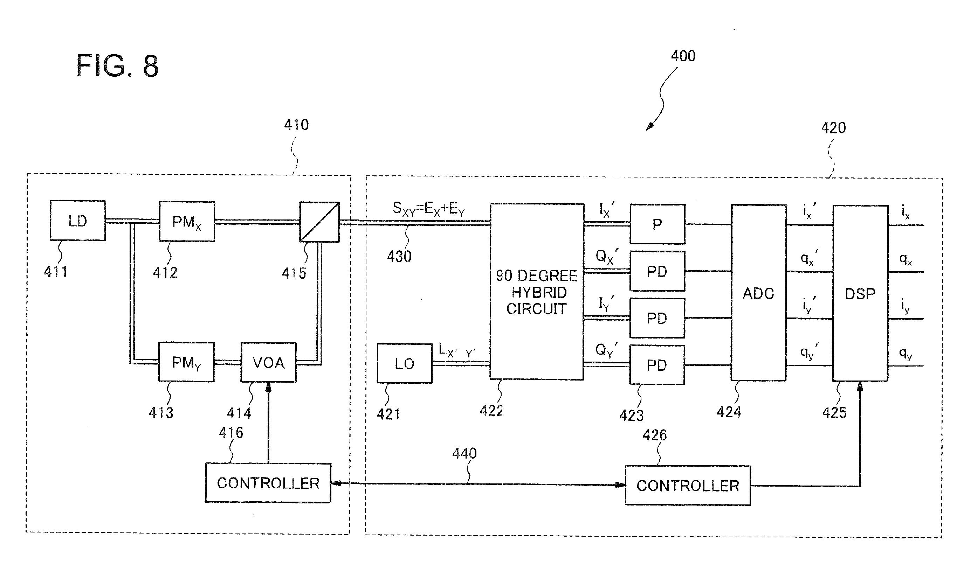

Next, the fourth exemplary embodiment of the present invention will be described. FIG. 8 is a block diagram showing the configuration of a digital coherent optical communications system 400 in accordance with the fourth exemplary embodiment of the present invention. The digital coherent optical communications system 400 includes a transmitter 410 and a receiver 420.

The transmitter 410 is provided with a signal light source (LD) 411, a first phase modulator ($PM_X$) 412 as a first modulator, and a second phase modulator ($PM_Y$) 413 as a second modulator. In addition, it has a polarization beam splitter (PBS) 415 as an orthogonal multiplexing unit and has a variable optical attenuator (VOA) 414 and a controller 416, which compose a transmission control unit.

The receiver 420 includes a local light source (LO) 421, a 90 degree hybrid circuit 422, and a photo detector (PD) 423, which compose a coherent optical receiving unit. In addition, it has an analog-to-digital converter (ADC) 424 and a digital signal processor (DSP) 425, which compose a signal processing unit, and has a receiving controller unit 426.

Here, the controller 416 controls the variable optical attenuator (VOA) 414 and the receiving controller unit 426 controls the digital signal processor (DSP) 425, respectively. The transmitter 410 and the receiver 420 are connected through an optical fiber 430 and communication is performed thereby. In addition, the digital coherent optical communications system 400 is provided with a line 440 which enables communication between the controller 416 and the receiving controller unit 426.

This exemplary embodiment differs from the second exemplary embodiment that the first phase modulator (PMx) 412 provided for the transmitter 410 modulates the X polarization light and the second phase modulator ($PM_Y$) 413 modulates the Y polarization light respectively, using the QPSK (Quadrature Phase Shift Keying) method. The orthogonal multiplexed signal light $S_{XY}$ ($= E_X + E_Y$) input into the receiver 420 interferes with the local light $L_{X'Y'}$ from the local light source (LO) 421 in the 90 degree hybrid circuit 422 to be projected on arbitrary polarization plane X', Y' of the local light $L_{X'Y'}$. At the same time, the 90 degree hybrid circuit 422 detects the phase difference between the orthogonal multiplexed signal light $S_{XY}$ and the local light $L_{X'Y'}$, and outputs to the photo detector 423 an in-phase output $I_X'$ and a quadrature-phase output Qx' which are X' polarization light, and an in-phase output $I_Y'$ and a quadrature-phase output $Q_Y'$ which are Y' polarization light. Each output light is detected by the photo detector 423, and the detection signal is input into the analog-to-digital converter (ADC) 424. The analog-to-digital converter (ADC) 424 quantizes these detection signals and then outputs quantized signals of $i_{x'}$, $q_{x'}$, $i_{y'}$, and $q_{y'}$. The quantized signals of $i_{x'}$, $q_{x'}$, $i_{y'}$, and $q_{y'}$ are processed for polarization demultiplexing in the digital signal processor (DSP) 425, and demodulated signals of $i_x$, $q_x$, $i_y$, and $q_y$ are obtained.

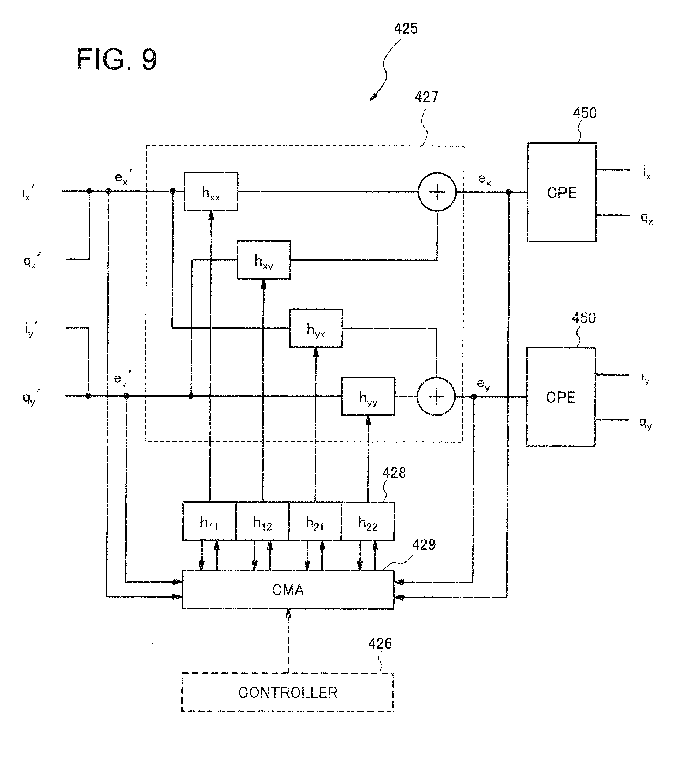

The configuration of the digital signal processor (DSP) 425 is shown in FIG. 9. The digital signal processor (DSP) 425 is provided with a CPE (Carrier Phase Estimation) unit 450 in addition to a butterfly filter 427, a memory unit 428, and a CMA processing unit (CMA) 429.

The quantized signals of $i_x'$, $q_x'$, $i_y'$, and $q_y'$ input into the digital signal processor (DSP) 425 are added with respect to each of X' polarization and Y' polarization and then are input into the butterfly filter 427 as ex' = $i_x'$ + $q_x'$, $e_y'$ = $i_y'$ + $q_y'$. The butterfly filter 427 performs the matrix operation on the input signals of $e_x'$ and $e_y'$ according to the formula (1), and outputs demodulated signals of $e_x$ and $e_y$.

One of the methods to calculate each element of this matrix H is a CMA algorithm (refer to a non patent literature 1, for example). As mentioned below, in this exemplary embodiment, the configuration is employed in which the CMA processing unit (CMA) 429 calculates each element of the matrix H (filter coefficients) by means of the CMA algorithm. The CMA algorithm performs control of keeping the intensity of the quantized signals of $e_x'$ and $e_y'$ constant using the error functions of $\varepsilon_x$ and $\varepsilon_y$ as shown in the formula (3). However, based solely on the information on the electric field intensity, it is indistinguishable whether the data in the quantized signals correspond to the information put on the X polarization light or the information put on the Y polarization light. Therefore, as mentioned above, when using the filter coefficients of $h_{11}$, $h_{12}$, $h_{21}$, and $h_{22}$ calculated by using the CMA algorithm, there can be cases where the signal component Ex of the first signal light with X polarization is converged on the demodulated signal $e_y$, and the signal component $E_Y$ of the second signal light with Y polarization is converged on the demodulated signal ex.

Therefore, in this exemplary embodiment, by setting up an order for calculation of the filter coefficients, the signal components which converge on the demodulated signals of $e_x$ and $e_y$ are controlled. Here, the phenomenon that the demodulated signals are switched with the transmission side does not occur at every updating of the filter coefficients. Therefore, by inputting the correct filter coefficients into the butterfly filter 427 at first and then updating them according to the formula (2) successively, it is possible to determine the filter coefficients with which to enable input signals to converge on the demodulated signals corresponding to the transmission side. In this exemplary embodiment, by means of the training method used in the second exemplary embodiment, the filter coefficients of $h_{11}$, $h_{12}$, $h_{21}$, and $h_{22}$ of the butterfly filter 427 are determined, with which the signal component Ex with X polarization is converged on the demodulated signal $e_x$ and the signal component $E_Y$ with Y polarization is converged on the demodulated signal $e_y$.

The CPE unit 450 extracts phase information from the demodulated signals $e_x$ and $e_y$ obtained by the CMA processing, separates I-channel and Q-channel demodulated signals $i_x$, $q_x$ from the demodulated signal $e_x$ with X polarization, separates demodulated signals $i_y$, $q_y$ from the demodulated signal $e_y$ with Y polarization respectively, and then outputs them.

In this exemplary embodiment, QPSK modulation scheme is employed as a modulation scheme for two-stream signals polarization multiplexed. However, the modulation scheme is not limited to this, other multilevel modulation schemes can be applied such as 8PSK (8-Phase Shift Keying) modulation scheme and 16QAM (Quadrature Amplitude Modulation) modulation scheme.

As mentioned above, according to this exemplary embodiment, it becomes possible to perform the polarization demultiplexing for the polarization multiplexed optical signals and to receive the first signal and the second signal corresponding to the transmission side, even if the first polarization light is multilevel modulated with the first signal and the second polarization light is multilevel modulated with the second signal at the transmission side respectively.

In the first to third exemplary embodiments, CMA algorithm is used for determining the filter coefficients. However, the algorithm is not limited to that, other algorithms can be used as long as they are filter coefficient determination algorithms for the butterfly filter such as an LMS (Least Mean Square) algorithm.

In addition, although the variable optical attenuator (VOA) is used for controlling the output of one polarization light in the above-mentioned exemplary embodiments, but not limited to this, the output of the modulator can be controlled by adjusting its bias.

The present invention is not limited to the above-mentioned exemplary embodiments and can be variously modified within the scope of the invention described in the claims. It goes without saying that these modifications are also included in the scope of the invention.

This application is based upon and claims the benefit of priority from Japanese patent application No. 2010-002501, filed on January 8, 2010, the disclosure of which is incorporated herein in its entirety by reference.

The whole or part of the exemplary embodiments disclosed above can be described as, but not limited to, the following supplementary notes.

(Supplementary note 1) A coherent optical receiving apparatus, comprising: a coherent optical receiving unit performing coherent optical detection; and a signal processing unit performing signal processing defined by control parameters; wherein the coherent optical receiving unit outputs a first detection signal receiving a first polarization light modulated by a first transmission signal, and outputs a second detection signal receiving simultaneously the first polarization light and a second polarization light modulated by a second transmission signal; and the signal processing unit determines a first control parameter on the basis of the first detection signal, determines a second control parameter on the basis of the first control parameter and the second detection signal, and outputs a first received signal corresponding to the first transmission signal and a second received signal corresponding to the second transmission signal by using the second control parameter.

(Supplementary note 2) The coherent optical receiving apparatus according to Supplementary note 1, wherein the signal processing unit comprises a filter unit performing signal processing on the basis of control parameters and a control parameter processing unit calculating the control parameters by a control parameter determination algorithm, wherein the control parameter processing unit determines the first control parameter so that an output signal may converge at the first received signal for an input of the first detection signal, changes the first control parameter so that the output signal may converge at the second received signal for an input of the second detection signal, and fixes a control parameter by which the output signal converges at the second received signal as the second control parameter, and the filter unit outputs the first received signal and the second received signal on the basis of the second control parameter.

(Supplementary note 3) The coherent optical receiving apparatus according to Supplementary note 1 or 2, further comprising a receiving controller unit controlling an operation of the signal processing unit; wherein the receiving controller unit instructs the signal processing unit to start a processing to determine the first control parameter when confirming that the coherent optical receiving unit has received the first polarization light, and instructs the signal processing unit to start a processing to determine the second control parameter when confirming that the coherent optical receiving unit has received simultaneously the first polarization light and the second polarization light.

(Supplementary note 4) The coherent optical receiving apparatus according to Supplementary note 3, wherein the coherent optical receiving unit comprises a photoelectric conversion unit connected to the receiving controller unit, and wherein the receiving controller unit confirms that the coherent optical receiving unit has received the first polarization light when the photoelectric conversion unit outputs a first receiving light signal, and confirms that the coherent optical receiving unit has received simultaneously the first polarization light and the second polarization light when the photoelectric conversion unit outputs a receiving light signal about twice as large as the first receiving light signal.

(Supplementary note 5) A coherent optical communications system, comprising: a transmitter; and a coherent optical receiving apparatus connected to the transmitter through an optical fiber; wherein the transmitter comprises a light source; a first modulator modulating output light having first polarization from the light source with a first transmission signal and outputting first polarization light; a second modulator modulating output light having second polarization from the light source with a second transmission signal and outputting second polarization light; an orthogonal multiplexing unit orthogonally multiplexing the first polarization light and the second polarization light and transmitting to the optical fiber; and a transmission control unit controlling intensity of the second polarization light; wherein the coherent optical receiving apparatus comprises a coherent optical receiving unit performing coherent optical detection; a signal processing unit performing signal processing defined by control parameters; and a receiving controller unit controlling an operation of the signal processing unit; wherein the coherent optical receiving unit receives the first polarization light and outputs

11

a first detection signal, and receives simultaneously the first polarization light and the second polarization light and outputs a second detection signal; the receiving controller unit instructs the signal processing unit to start a processing to determine a first control parameter when confirming that the coherent optical receiving unit has received the first polarization light, and instructs the signal processing unit to start a processing to determine a second control parameter when confirming that the coherent optical receiving unit has received simultaneously the first polarization light and the second polarization light; and the signal processing unit determines the first control parameter on the basis of the first detection signal, determines the second control parameter on the basis of the first control parameter and the second detection signal, and outputs a first received signal corresponding to the first transmission signal and a second received signal corresponding to the second transmission signal by using the second control parameter.

(Supplementary note 6) The coherent optical communications system according to Supplementary note 5, wherein the signal processing unit determines the first control parameter so that an output signal may converge at the first received signal for an input of the first detection signal, changes the first control parameter so that the output signal may converge at the second received signal for an input of the second detection signal, and fixes a control parameter by which the output signal converges at the second received signal as the second control parameter.

(Supplementary note 7) The coherent optical communications system according to Supplementary note 5 or 6, further comprising a line connecting the transmission control unit to the receiving controller unit; wherein the receiving controller unit transmits a first notification to the transmission control unit through the line when the first control parameter is determined; the transmission control unit gets the transmitter outputting simultaneously the first polarization light and the second polarization light by increasing the intensity of the second polarization light when receiving the first notification, and transmits a second notification to the receiving controller unit through the line; and the receiving controller unit confirms that the coherent optical receiving unit has received simultaneously the first polarization light and the second polarization light when receiving the second notification.

(Supplementary note 8) The coherent optical communications system according to Supplementary note 5 or 6, wherein the coherent optical receiving unit comprises a photoelectric conversion unit connected to the receiving controller unit, wherein the receiving controller unit confirms that the coherent optical receiving unit has received the first polarization light when the photoelectric conversion unit outputs a first receiving light signal, and confirms that the coherent optical receiving unit has received simultaneously the first polarization light and the second polarization light when the photoelectric conversion unit outputs a receiving light signal about twice as large as the first receiving light signal.

(Supplementary note 9) A coherent optical communications method, comprising the steps of: transmitting first polarization light obtained by modulating output light having first polarization with a first transmission signal; receiving the first polarization light and obtaining a first detection signal by performing coherent optical detection; transmitting second polarization light obtained by modulating output light having second polarization with a second transmission signal; receiving simultaneously the first polarization light and the second polarization light and obtaining a second detection signal by performing coherent optical detection; determining a first control parameter on the basis of the first detection signal; determining a second control parameter on the basis of the first control parameter and the second detection signal; and obtaining a first received signal corresponding to the first transmission signal and a second received signal corresponding to the second transmission signal by using the second control parameter.

(Supplementary note 10) The coherent optical communications method according to Supplementary note 9, wherein, in the step of determining the first control parameter, setting control parameter so that an output signal may converge at the first received signal for an input of the first detection signal; and in the step of determining the second control parameter, changing the first control parameter so that the output signal may converge at the second received signal for an input of the second detection signal, and fixing a control parameter by which the output signal converges at the second received signal as the second control parameter.

(Supplementary note 11) The coherent optical communications method according to Supplementary note 9 or 10, wherein, in the step of transmitting the second polarization light, using the determination of the first control parameter as a trigger to start transmitting the second polarization light.

(Supplementary note 12) The coherent optical communications method according to any one of Supplementary notes 9, 10, and 11, wherein, in the step of determining the second control parameter, using the transmission of the second polarization light as a trigger to start determining the second control parameter.

DESCRIPTION OF THE CODES

| 100 | coherent optical receiving apparatus |
| --- | --- |
| 110 | coherent optical receiving unit |

| | |
|---|---|
| 120 | signal processing unit |
| 121 | filter unit |
| 122 | control parameter processing unit |
| 200, 300, 400 | coherent optical communications system |
| 210, 310A, 310B, 410 | transmitter |
| 211, 311, 411 | signal light source (LD) |
| 212, 412 | first phase modulator (PM$_X$) |
| 213, 413 | second phase modulator (PM$_Y$) |
| 214, 414 | variable optical attenuator (VOA) |
| 215, 415 | polarization beam splitter (PBS) |
| 216, 316, 416 | controller |
| 220, 320A, 320B, 420 | receiver |
| 221, 421, 511 | local light source (LO) |
| 222, 422, 512 90 | degree hybrid circuit |
| 223, 323, 423, 513 | photo detector (PD) |
| 224, 424, 514 | analog-to-digital converter (ADC) |
| 225, 425, 515 | digital signal processor (DSP) |
| 226, 326, 426 | receiving controller unit |
| 227, 427, 516 | butterfly filter |
| 228, 428 | memory unit |
| 229, 429, 517 | CMA processing unit (CMA) |
| 230, 330, 430 | optical fiber |
| 240, 440 | line |
| 300A, 300B | terminal station |
| 301 | first coherent optical communications system |
| 302 | second coherent optical communications system |
| 450 | CPE unit |
| 500 | related coherent optical receiving apparatus |

**Claims**

1. A coherent optical receiving apparatus, comprising:

   a coherent optical receiving unit performing coherent optical detection; and
   a signal processing unit performing signal processing defined by control parameters;
   wherein the coherent optical receiving unit outputs a first detection signal receiving a first polarization light modulated by a first transmission signal, and outputs a second detection signal receiving simultaneously the first polarization light and a second polarization light modulated by a second transmission signal; and
   the signal processing unit determines a first control parameter on the basis of the first detection signal, determines a second control parameter on the basis of the first control parameter and the second detection signal, and outputs a first received signal corresponding to the first transmission signal and a second received signal corresponding to the second transmission signal by using the second control parameter.

2. The coherent optical receiving apparatus according to claim 1, wherein the signal processing unit comprises a filter unit performing signal processing on the basis of control parameters and a control parameter processing unit calculating the control parameters by a control parameter determination algorithm,
   wherein the control parameter processing unit determines the first control parameter so that an output signal may converge at the first received signal for an input of the first detection signal, changes the first control parameter so that the output signal may converge at the second received signal for an input of the second detection signal, and fixes a control parameter by which the output signal converges at the second received signal as the second control parameter, and
   the filter unit outputs the first received signal and the second received signal on the basis of the second control parameter.

3. The coherent optical receiving apparatus according to claim 1 or 2, further comprising a receiving controller unit controlling an operation of the signal processing unit;
   wherein the receiving controller unit instructs the signal processing unit to start a processing to determine the first control parameter when confirming that the coherent optical receiving unit has received the first polarization light, and instructs the signal processing unit to start a processing to determine the second control parameter when confirming that the coherent optical receiving unit has received simultaneously the first polarization light and the second polarization light.

4. The coherent optical receiving apparatus according to claim 3,
   wherein the coherent optical receiving unit comprises a photoelectric conversion unit connected to the receiving controller unit, and
   wherein the receiving controller unit confirms that the coherent optical receiving unit has received the first polarization light when the photoelectric conversion unit outputs a first receiving light signal, and confirms that the coherent optical receiving unit has received simultaneously the first polarization light and the second polarization light when the photoelectric conversion unit outputs a receiving light signal about twice as large as the first receiving light signal.

5. A coherent optical communications system, comprising:

   a transmitter; and
   a coherent optical receiving apparatus connected to the transmitter through an optical fiber;

   wherein the transmitter comprises

   a light source;
   a first modulator modulating output light having first polarization from the light source with a first transmission signal and outputting first polarization light;
   a second modulator modulating output light having second polarization from the light source with a second transmission signal and outputting second polarization light;
   an orthogonal multiplexing unit orthogonally multiplexing the first polarization light and the second polarization light and transmitting to the optical fiber; and
   a transmission control unit controlling intensity of the second polarization light;

   wherein the coherent optical receiving apparatus comprises

a coherent optical receiving unit performing coherent optical detection;

a signal processing unit performing signal processing defined by control parameters; and

a receiving controller unit controlling an operation of the signal processing unit;

wherein the coherent optical receiving unit receives the first polarization light and outputs a first detection signal, and receives simultaneously the first polarization light and the second polarization light and outputs a second detection signal;

the receiving controller unit instructs the signal processing unit to start a processing to determine a first control parameter when confirming that the coherent optical receiving unit has received the first polarization light, and instructs the signal processing unit to start a processing to determine a second control parameter when confirming that the coherent optical receiving unit has received simultaneously the first polarization light and the second polarization light; and

the signal processing unit determines the first control parameter on the basis of the first detection signal, determines the second control parameter on the basis of the first control parameter and the second detection signal, and outputs a first received signal corresponding to the first transmission signal and a second received signal corresponding to the second transmission signal by using the second control parameter.

6. The coherent optical communications system according to claim 5, wherein the signal processing unit determines the first control parameter so that an output signal may converge at the first received signal for an input of the first detection signal, changes the first control parameter so that the output signal may converge at the second received signal for an input of the second detection signal, and fixes a control parameter by which the output signal converges at the second received signal as the second control parameter.

7. The coherent optical communications system according to claim 5 or 6, further comprising a line connecting the transmission control unit to the receiving controller unit;

wherein the receiving controller unit transmits a first notification to the transmission control unit through the line when the first control parameter is determined;

the transmission control unit gets the transmitter outputting simultaneously the first polarization light and the second polarization light by increasing the intensity of the second polarization light when receiving the first notification, and transmits a second notification to the receiving controller unit through the line; and

the receiving controller unit confirms that the coherent optical receiving unit has received simultaneously the first polarization light and the second polarization light when receiving the second notification.

8. The coherent optical communications system according to claim 5 or 6, wherein the coherent optical receiving unit comprises a photoelectric conversion unit connected to the receiving controller unit,

wherein the receiving controller unit confirms that the coherent optical receiving unit has received the first polarization light when the photoelectric conversion unit outputs a first receiving light signal, and confirms that the coherent optical receiving unit has received simultaneously the first polarization light and the second polarization light when the photoelectric conversion unit outputs a receiving light signal about twice as large as the first receiving light signal.

9. A coherent optical communications method, comprising the steps of:

transmitting first polarization light obtained by modulating output light having first polarization with a first transmission signal;

receiving the first polarization light and obtaining a first detection signal by performing coherent optical detection;

transmitting second polarization light obtained by modulating output light having second polarization with a second transmission signal;

receiving simultaneously the first polarization light and the second polarization light and obtaining a second detection signal by performing coherent optical detection;

determining a first control parameter on the basis of the first detection signal;

determining a second control parameter on the basis of the first control parameter and the second detection signal; and

obtaining a first received signal corresponding to the first transmission signal and a second received signal corresponding to the second transmission signal by using the second control parameter.

10. The coherent optical communications method according to claim 9, wherein,

in the step of determining the first control parameter, setting control parameter so that an output signal may converge at the first received signal for an input of the first detection signal; and

in the step of determining the second control parameter, changing the first control parameter so that the output signal may converge at the second received signal for an input of the second detection signal, and fixing a control parameter by which the output signal converges at the second received signal as the second control parameter.

11. The coherent optical communications method according to claim 9 or 10, wherein,
    in the step of transmitting the second polarization light, using the determination of the first control parameter as a trigger to start transmitting the second polarization light.

12. The coherent optical communications method according to any one of claims 9, 10, and 11, wherein,
    in the step of determining the second control parameter, using the transmission of the second polarization light as a trigger to start determining the second control parameter.

# FIG. 1

FIG. 2

FIG. 3

# FIG. 4

TRANSMITTER

RECEIVER

| X POLARIZATION LIGHT ON Y POLARIZATION LIGHT OFF | S101 | $h_{11}=h_{11}(0)$, $h_{12}=h_{12}(0)$ |

S102

S103

S104 — CMA ALGORITHM START

S105 — CMA ALGORITHM STOP
$h_{11}=h_{11}(l)$, $h_{12}=h_{12}(l)$

S106

S107 — $h_{11}=h_{11}(l)$, $h_{12}=h_{12}(l)$
$h_{21}=-h_{12}(l)$, $h_{22}=h_{11}(l)$

| Y POLARIZATION LIGHT ON | S109 |

S108

S110 — CMA ALGORITHM RESUME

S111 — CMA ALGORITHM CONVERGENCE
$h_{11}=h_{11}(k)$, $h_{12}=h_{12}(k)$
$h_{21}=h_{21}(k)$, $h_{22}=h_{22}(k)$

S112

# FIG. 5

FIG. 6

# FIG. 7

TERMINAL STATION 300A                    TERMINAL STATION 300B

| X POLARIZATION LIGHT ON | S202 |
| Y POLARIZATION LIGHT OFF | S201 |

$h_{11}=bh_{11}(0), h_{12}=bh_{12}(0)$

S203        S204        CMA ALGORITHM START

S205        CMA ALGORITHM STOP
$h_{11}=bh_{11}(l), h_{12}=bh_{12}(l)$

$h_{11}=ah_{11}(0), h_{12}=ah_{12}(0)$        S206

X POLARIZATION LIGHT ON        S207
Y POLARIZATION LIGHT OFF

CMA ALGORITHM START        S209        S208

CMA ALGORITHM STOP        S210
$h_{11}=ah_{11}(l), h_{12}=ah_{12}(l)$

Y POLARIZATION LIGHT ON        S212

$h_{11}=bh_{11}(l), h_{12}=bh_{12}(l)$        S211
$h_{21}=-bh_{12}(l), h_{22}=bh_{11}(l)$

S213        S214        CMA ALGORITHM RESUME

S215        CMA ALGORITHM CONVERGENCE
$h_{11}=bh_{11}(k), h_{12}=bh_{12}(k)$
$h_{21}=bh_{21}(k), h_{22}=bh_{22}(k)$

$h_{11}=ah_{11}(l), h_{12}=ah_{12}(l)$        S216
$h_{21}=-ah_{12}(l), h_{22}=ah_{11}(l)$        S217

Y POLARIZATION LIGHT ON

CMA ALGORITHM RESUME        S219        S218

CMA ALGORITHM CONVERGENCE        S220
$h_{11}=ah_{11}(k), h_{12}=ah_{12}(k)$
$h_{21}=ah_{21}(k), h_{22}=ah_{22}(k)$

FIG. 8

# FIG. 9

FIG. 10

**INTERNATIONAL SEARCH REPORT**

| International application No. |
| --- |
| PCT/JP2010/073866 |

A. CLASSIFICATION OF SUBJECT MATTER
*H04B10/04*(2006.01)i, *G02F2/00*(2006.01)i, *H04B10/06*(2006.01)i, *H04B10/14*
(2006.01)i, *H04B10/142*(2006.01)i, *H04B10/152*(2006.01)i, *H04B10/26*
(2006.01)i, *H04B10/28*(2006.01)i

According to International Patent Classification (IPC) or to both national classification and IPC

B. FIELDS SEARCHED

Minimum documentation searched (classification system followed by classification symbols)
H04B10/04, G02F2/00, H04B10/06, H04B10/14, H04B10/142, H04B10/152,
H04B10/26, H04B10/28

Documentation searched other than minimum documentation to the extent that such documents are included in the fields searched
Jitsuyo Shinan Koho          1922-1996     Jitsuyo Shinan Toroku Koho     1996-2011
Kokai Jitsuyo Shinan Koho     1971-2011     Toroku Jitsuyo Shinan Koho     1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2009-296183 A  (National Institute of Information and Communications Technology), 17 December 2009 (17.12.2009), paragraphs [0016] to [0048]; fig. 1 to 2 (Family: none) | 1-12 |
| A | JP 2008-263590 A  (Fujitsu Ltd.), 30 October 2008 (30.10.2008), paragraphs [0001] to [0049]; fig. 1 to 8 & US 2008/0232816 A1 | 1-12 |
| A | JP 2008-153863 A  (Fujitsu Ltd.), 03 July 2008 (03.07.2008), paragraphs [0015] to [0035]; fig. 1 to 2 & US 2008/0145066 A1     & EP 1933478 A1 & CN 101207444 A | 1-12 |

☐  Further documents are listed in the continuation of Box C.       ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 February, 2011 (24.02.11) | 08 March, 2011 (08.03.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008153863 A

- JP 2010002501 A

**Non-patent literature cited in the description**

- **D. N. GODARD.** Self-Recovering Equalization and Carrier Tracking in Two-Dimensional Data Communication Systems. *IEEE Transactions on Communications, The Institute of Electrical and Electronics Engineers,* November 1980, vol. COM-28 (11), 1867-1875